# EUROPEAN PATENT APPLICATION

(11) **EP 1 801 487 A1**
(43) Date of publication of application: **27.06.2007**
(21) Application number: 05774917.8
(22) Date of filing: 22.08.2005
(51) Int. Cl.: F17C 13/04, B60K 15/03, H01M 8/04

(54) **HIGH-PRESSURE TANK AND VALVE ASSEMBLY**

(30) Priority: 23.08.2004 JP 2004242190
(71) Applicant: TOYOTA JIDOSHA KABUSHIKI KAISHA, Toyota-shi, Aichi-ken, 471-8571 (JP)
(72) Inventor: IIDA, Yasuyuki, TOYOTA JIDOSHA KABUSHIKI KAISHA, Toyota-shi, Aichi 4718571 (JP); OGAMI, Nobuyuki, TOYOTA JIDOSHA KABUSHIKI KAISHA, Toyota-shi, Aichi 4718571 (JP); KOBAYASHI, Nobuo, TOYOTA JIDOSHA KABUSHIKI KAISHA, Toyota-shi, Aichi 4718571 (JP); YAMASHITA, Akira, TOYOTA JIDOSHA KABUSHIKI KAISHA, Toyota-shi, Aichi 4718571 (JP)
(74) Representative: TBK-Patent
(86) International application number: PCT/JP2005/015585
(87) International publication number: WO 2006/022393

(57) **Abstract**

A high-pressure tank and a valve assembly capable of properly increasing the easiness of handling of a pressure regulating valve. A high-pressure tank 1 includes a valve assembly 10 integrally having a cutoff valve 11 and a pressure regulating valve 12. The valve assembly 10 has a first area 15 inserted within the high-pressure tank 1, and a second area 16 exposed to the outside of the high-pressure tank 1. The cutoff valve 11 is disposed in the first area 15, and at least a part of the pressure regulating valve 12 is disposed in the second area 16.

## Description

### BACKGROUND

The present invention relates to a valve assembly structure for a high-pressure tank in which a valve assembly integrally having a cutoff valve and a pressure regulating valve is provided in the high-pressure tank, and more particularly to a high-pressure tank and a valve assembly in which the disposition of the cutoff valve and the pressure regulating valve is defined with respect to the high-pressure tank.

A high-pressure tank reserving gas such as hydrogen gas or the like under high pressure is mounted, for example, on a moving object such as a fuel cell vehicle or the like. The gas within the high-pressure tank is supplied to the fuel cell or the like through a gas supply line. There has been known such a structure that a cutoff valve and a pressure regulating valve provided in the gas supply line, which are positioned closer to the high-pressure tank among various valves, are disposed integrally and connected in series, to form a valve assembly, and the valve assembly is provided in a ferrule portion of the high-pressure tank.

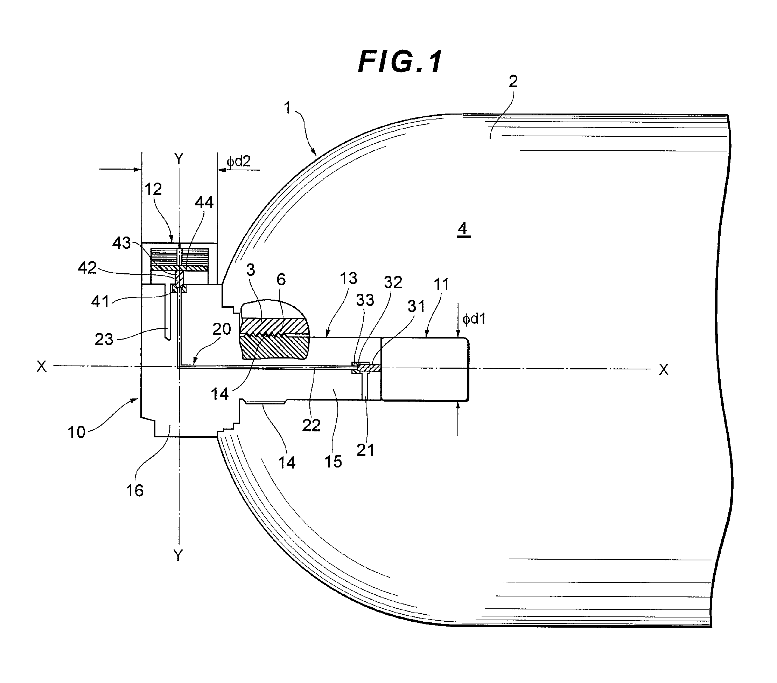

For example, as this kind of valve assembly structure for the high-pressure tank, there has been known a structure in which both of the cutoff valve and the pressure regulating valve are arranged within the high-pressure tank (for example, refer to Japanese Patent Laid-Open No. 2003-90499 (Fig. 1)), and a structure in which the pressure regulating valve is disposed in the high-pressure tank and the cutoff valve is disposed outside of the high-pressure tank (for example, refer to Japanese Patent Laid-Open No. 2003-166700 (Fig. 1) and USP No. 6041762 (Fig. 3)).

In the conventional valve assembly structure for the high-pressure tank mentioned above, at least one valve can be accommodated in the high-pressure tank, and it is useful in the light of constraint of the installation space in the moving object (for example, the mounting space in a vehicle). However, since the pressure regulating valve in the valve assembly is positioned within the high-pressure tank, it is hard to execute a regulating work for a secondary side pressure (a pressure regulating characteristic) of the pressure regulating valve.

### SAMMARY

An object of the present invention is to provide a high-pressure tank and a valve assembly in which the easiness of handling of a pressure regulating valve can be appropriately enhanced.

In order to achieve the object, a high-pressure tank, according to the present invention, includes a valve assembly integrally having a cutoff valve and a pressure regulating valve, wherein the valve assembly has a first area inserted within the high-pressure tank, and a second area exposed to the outside of the high-pressure tank. The cutoff valve is disposed in the first area, and at least a part of the pressure regulating valve is disposed in the second area.

In this structure, it is possible to appropriately enhance the easiness of handling and the maintenance performance, for example, it is possible to regulate a secondary side pressure of the pressure regulating valve via at least a part of the pressure regulating valve exposed to the outside of the high-pressure tank. Further, since the cutoff valve is disposed inside the high-pressure tank, it is possible to reduce a portion protruding to the outside of the high-pressure tank, and it is possible to improve the mountability of the high-pressure tank.

In this case, as high-pressure gas reserved in the high-pressure tank, various kind of gas, for example, hydrogen gas, natural gas, oxygen gas, air and the like, are included. The valve assembly may integrally have the other valves such as a safety valve and the like, in addition to the cutoff valve and the pressure regulating valve. The cutoff valve may be generally constituted by an electromagnetic valve. The pressure regulating valve can employ any of a direct acting type valve and a pilot type valve. Further, the pressure regulating valve may be constituted so as to mechanically control the pressure or it may be constituted as an electro-pneumatic regulator, for example.

In an embodiment of the high-pressure tank of the present invention, it is preferable that the high-pressure tank has a mouth portion for inserting the first area into the high-pressure tank, the mouth portion has an internal thread, and the first area has an external thread engaged with the internal thread.

A high-pressure tank, according to another aspect of the present invention, includes a valve assembly integrally having a cutoff valve and a pressure regulating valve, wherein the valve assembly is provided across the inside and the outside of the high-pressure tank, the cutoff valve is disposed in the high-pressure tank, and at least a part of the pressure regulating valve is disposed so that it is exposed to the outside of the high-pressure tank.

In this structure, in the same manner as mentioned above, since at least a part of the pressure regulating valve is exposed to the outside of the high-pressure tank, it is possible to appropriately enhance the easiness of handling of the pressure regulating valve. Further, since the cutoff valve is arranged in the high-pressure tank, it is possible to reduce a portion protruding to the outside of the high-pressure tank.

Preferably, the valve assembly is adapted to be screwed in a ferrule portion of the high-pressure tank.

In this structure, it is possible to easily connect the valve assembly to the high-pressure tank with a sufficient strength.

Further, the present invention can be perceived in the viewpoint of a valve assembly, as follows.

That is, a valve assembly, according to the present invention, is provided in a high-pressure tank and integrally having a cutoff valve and a pressure regulating valve. The valve assembly has a first area inserted within the high-pressure tank, and a second area exposed to the outside of the high-pressure tank. The cutoff valve is disposed in the first area, and at least a part of the pressure regulating valve is arranged in the second area.

Further, a valve assembly, according to a further aspect of the present invention, is provided in a high-pressure tank and integrally having a cutoff valve and a pressure regulating valve, wherein the cutoff valve is disposed in the high-pressure tank, and at least a part of the pressure regulating valve is disposed so that it is exposed to the outside of the high-pressure tank.

In these structures, as mentioned above, it is possible to appropriately enhance the easiness of handling of the pressure regulating valve, and it is possible to improve the mountability of the high-pressure tank.

In accordance with an embodiment of the high-pressure tank of the present invention or the valve assembly of the present invention, it is preferable that at least a part of the pressure regulating valve is constituted by a portion for setting a pressure regulating characteristic of the pressure regulating valve.

In this structure, it is possible to appropriately regulate a secondary side pressure (a pressure regulating characteristic) of the pressure regulating valve. In this case, the portion for setting the pressure regulating characteristic of the pressure regulating valve corresponds to a portion capable of setting the urging force acting on both surfaces of a diaphragm, for example, in the case that the pressure regulating valve is constituted by a diaphragm type. As that portion, there can be listed up, for example, a diaphragm, a pressure regulating spring directly or indirectly biasing the diaphragm, a handle for compressing or pulling the pressure regulating spring, and a valve disc directly or indirectly coupled to the diaphragm.

In accordance with a further embodiment of the high-pressure tank of the present invention or the valve assembly of the present invention, it is preferable that the size of the pressure regulating valve is larger than that of the cutoff valve.

In this structure, for example, in the case of the screw connection mentioned above, it is possible to preferably contribute to the cost reduction of the thread portion and the improvement of durability of the pressure regulating valve.

In accordance with a further embodiment of the high-pressure tank of the present invention or the valve assembly of the present invention, it is preferable that an axial direction of a valve rod of the pressure regulating valve intersects an axis of the high-pressure tank. More preferably, the axial direction of the valve rod of the pressure regulating valve is orthogonal to the axis of the high-pressure tank.

In general, since the length of the pressure regulating valve as a whole is generally set longer in the axial direction of the valve rod, the entire length of the high-pressure tank having the valve assembly tends to become longer if the axial direction of the pressure regulating valve is in conformity with the axial direction of the high-pressure tank. So it is possible to make the entire length of the high-pressure tank having the valve assembly comparatively shorter, by arranging the axial directions of the both to intersect to each other or to be orthogonal to each other. Therefore, the high-pressure tank and the valve assembly do not occupy a larger installation space in which they are installed.

In accordance with a further embodiment of the high-pressure tank of the present invention or the valve assembly of the present invention, it is preferable that the axial direction of the valve rod of the pressure regulating valve intersects the axial direction of the valve rod of the cutoff valve. More preferably, the axial direction of the valve rod of the pressure regulating valve is orthogonal to the axial direction of the valve rod of the cutoff valve.

In the same manner as mentioned above, it is possible to avoid the occupation of a larger installation space, and it is possible to suitably arrange the cutoff valve and the pressure regulating valve.

Further, in view of developments for attaining the present invention, the present invention can be perceived in a plurality of further viewpoints, as follows.

A valve assembly structure for a high-pressure tank, according to another present invention, is provided with a valve assembly integrally having a cutoff valve and a pressure regulating valve in a high-pressure tank, wherein the cutoff valve is arranged within the high-pressure tank, and the pressure regulating valve is arranged outside of the high-pressure tank.

In this structure, since the pressure regulating valve is arranged outside the high-pressure tank, it is possible to appropriately enhance the easiness of handling and the maintenance performance such as the regulation work for a secondary side pressure of the pressure regulating valve. Further, since the cutoff valve is arranged within the high-pressure tank, it is possible to reduce a portion protruding to the outside of the high-pressure tank, and it is possible to improve the mountability of the high-pressure tank.

In this case, the inside of the high-pressure tank and the outside of the high-pressure tank may be interpreted as the inside and the outside with reference to an outer peripheral surface of an outer shell of the tank. In this case, the pressure regulating valve may be constituted such that a part of the structure of the pressure regulating valve is included in the high-pressure tank, as far as the adjustment thereof can be executed from the outside of the high-pressure tank. For example, as far as the adjustment work of the pressure regulating valve can be executed from the outside of the high-pressure tank, the pressure regulating valve may be arranged so that about half of a major part of the pressure regulating valve is arranged inside the high-pressure tank from the outer peripheral surface of the outer shell of the tank. Since a part of the structure of the pressure regulating valve is included in the high-pressure tank, it is possible to further reduce the entire space.

Preferably, the valve assembly is adapted to be screwed in a ferrule portion of the high-pressure tank.

Preferably, the size of the pressure regulating valve is larger than that of the cutoff valve.

Preferably, an axial direction of a valve rod of the pressure regulating valve is orthogonal to an axis of the high-pressure tank.

Preferably, the axial direction of the valve rod of the pressure regulating valve intersects the axial direction of the valve rod of the cutoff valve.

Further, it is possible to provide a moving object mounting the valve assembly structure for the high-pressure tank in accordance with the present invention mentioned above thereon. In accordance with this structure, it is possible to provide a moving object having the enhanced easiness of handling of the pressure regulating valve. Further, the installation space of the high-pressure tank and the valve assembly in a moving object is generally constrained, however, it is possible to suitably arrange these elements in the constrained installation space. In this case, the moving object can be embodied by transport means using a high-pressure tank as a power source, for example, a vehicle, an aircraft, a marine vessel and the like.

According to the high-pressure tank and the valve assembly of the present invention described above, it is possible to appropriately enhance the easiness of handling of the pressure regulating valve. Further, it is possible to improve the mountability of the high-pressure tank.

### DESCRIPTION OF THE DRAWINGS

Fig. 1 is a view showing the structure of a high-pressure tank in accordance with an embodiment in a simplified manner.

### DETAILED DESCRIPTION

The description will be given below of a valve assembly structure for a high-pressure tank in accordance with a preferable embodiment of the present invention with reference to the accompanying drawings. The valve assembly structure for the high-pressure tank can be appropriately mounted on a moving object such as a fuel cell vehicle or the like, and has a cutoff valve disposed in the high-pressure tank and a pressure regulating valve disposed outside of the high-pressure tank so as to enhance the easiness of handling or the like of the pressure regulating valve.

As shown in Fig. 1, a high-pressure tank 1 has a tank body 2 formed in a hermetically sealed cylindrical shape as a whole, and a ferrule portion 3 arranged in one end in the longitudinal direction of the tank body 2. The inside of the tank body 2 forms a reservoir space 4 reserving various kind of gas such as natural gas, hydrogen gas or the like under the high pressure. In the case that the high-pressure tank 1 is applied to a fuel cell system, for example, 35 MPa or 70 MPa hydrogen gas, or 20 MPa CNG gas (Compressed Natural Gas) is reserved in the reservoir space 4.

The outer shell of the tank body 2 has a two-layer structure constituted by an inner liner having gas barrier performance and a shell covering the outer side of the liner and made of FRP. The liner is constituted by a plastic, for example, high density polyethylene or the like. The tank body 2 can be made of the plastic, however, the tank body 2 may be, of course, made of metal such as aluminum alloy or the like.

The ferrule portion 3 (mouth portion) is formed of metal, for example, stainless steel or the like, and is arranged in the center of the spherical end wall of the tank body 2. An internal thread 6 for connecting a valve assembly 10 by screwing is formed in the inner peripheral surface of the ferrule portion 3. In this case, Fig. 1 shows a portion around the internal thread 6 of the ferrule portion 3 in a partially cutaway manner. The gas in the high-pressure tank 1 is supplied to an external gas supply line via the valve assembly 10 connected to the ferrule portion 3.

The valve assembly 10 is provided across the inside and the outside of the high-pressure tank 1. The valve assembly 10 integrally has a cutoff valve 11 disposed in the reservoir space 4 in the tank body 2, and a pressure regulating valve 12 disposed outside of the tank body 2.

The valve assembly 10 has, for example, a single housing 13, and the cutoff valve 11 and the pressure regulating valve 12 are incorporated in the housing 13 in series. In other words, the housing 13 has the cutoff valve 11 incorporated in the first area 15 inserted in the high-pressure tank 1, and the pressure regulating valve 12 incorporated in the second area 15 exposed to the outside of the high-pressure tank 1.

The outer peripheral surface of the first area 15 has an external thread 14 engaged with the internal thread 6 of the ferrule portion 3, and the structure is made such that the valve assembly 10 can be screwed in the ferrule portion 3 via the thread portions. A plurality of seal members (not shown) are arranged between the valve assembly 10 and the ferrule portion 3 in an airtight manner.

The housing 13 may be per se structured by a single member, or may be structured by combining a plurality of members. Further, the housing 13 can double with valve bodies of the cutoff valve 11 and the pressure regulating valve 12, however, it goes without saying that the structure may be made such that the valve bodies of the respective valves 11 and 12 are independently formed, and the respective valve bodies are assembled in the housing 13.

In other words, viewing the valve assembly 10 as a whole, the state in which the independently structured cutoff valve 11 and pressure regulating valve 12 are integrally assembled in the housing 13 is also included in the state in which the valve assembly 10 "integrally has" the cutoff valve 11 and the pressure regulating valve 12. Note that the valve assembly 10 may integrally have the other valves such as a safety valve (a relief valve and a fusible plug valve), a check valve and the like, in addition to the cutoff valve 11 and the pressure regulating valve 12.

An in-valve flow path 20 communicating the reservoir space 4 with an external gas supply line is formed in the housing 13 of the valve assembly 10. The in-valve flow path 20 is formed by connecting a first flow path 21, a second flow path 22 and a third flow path 23, with the paths being arranged in this order from the reservoir space 4 side. The portion between the first flow path 21 and the second flow path 22 is connected or cut off by the cutoff valve 11. The second flow path 22 is a primary side flow path of the pressure regulating valve 12. The third flow path 23 is a secondary side flow path of the pressure regulating valve 12 and is connected to the gas supply line in the outer portion.

The cutoff valve 11 (on-off valve) is constituted, for example, by an electromagnetic valve, and is constituted such that the in-valve flow path 20 can be opened and closed by a valve rod 31 (a movable element, a valve disc) moving forward and backward by actuating the solenoid. The cutoff valve 11 serves as an source valve with respect to the high-pressure tank 1, and is constituted so as to close the flow of fluid (gas) to the gas supply line from the inside of the high-pressure tank 1. The cutoff valve 11 is constituted, for example, such that the valve rod 31 moves forward in the axial direction thereof based on the excitation of the solenoid, a valve member 32 provided on the leading end of the valve rod 31 is brought into contact with a valve seat 33, and thereby the in-valve flow path 20 is cut off. On the other hand, the valve rod 31 moves backward in the axial direction thereof based on the demagnetization of the solenoid, the valve member 32 moves away from the valve seat 33, and thereby the in-valve flow path 20 is communicated. In this case, the axial direction X-X of the valve rod 31 coincides with the axial direction of the high-pressure tank 1.

The pressure regulating valve 12 is positioned at the outside of the outer peripheral surface formed by the outer shell of the tank body 2. The pressure regulating valve 12 is constituted, for example, by a direct acting type regulator, and depressurizes gas fed to the gas supply line from the reservoir space 4. The pressure regulating valve 12 depressurizes the gas to a predetermined pressure based on a forward and backward movement of a valve rod 43 in the axial direction in response to a secondary side pressure. The valve rod 43 has a valve member 42 facing to a valve seat 41. In this case, the axial direction Y-Y of the valve rod 43 is orthogonal to the axial direction X-X of the high-pressure tank 1 (axial direction of the valve rod 31 of the cutoff valve 11).

In this case, for example, the forward and backward movement of the valve rod 43 of the pressure regulating valve 12 is executed in response to a pressure difference acting on both surfaces of a diaphragm 44 and a pressure regulating spring. The pressure regulating characteristic (valve opening characteristic) of the pressure regulating valve 12 can be set by changing at least one item of the pressure receiving area, the shape and rigidity of the valve member 42 and the diaphragm 44, and the shape, the material characteristic and the spring constant of the pressure regulating spring. Since the pressure regulating valve 12 in accordance with the present embodiment is arranged outside of the high-pressure tank 1, it is possible to efficiently execute the regulation of the pressure regulating characteristic. In this case, the pressure regulating valve 12 may be actuated in accordance with a pilot type, or may be structured as an electro-pneumatic regulator.

Here, the description will be given in detail of a layout of the pressure regulating valve 12 with respect to the high-pressure tank 1. Taking into consideration an access with a good workability to the pressure regulating valve 12 from the outside of the high-pressure tank 1, the whole structure of the pressure regulating valve 12 is not necessarily disposed inside the outer peripheral surface of the outer shell of the tank body 2. In other words, it is sufficient that the pressure regulating valve 12 is disposed in such a manner that the structure necessary for securing the pressure regulating characteristic, the easiness of handling or the like is exposed to the outer side of the high-pressure tank 1, and the structure which is not always necessary for securing the pressure regulating characteristic, the easiness of handling or the like may be disposed in such a manner as to be immersed into the high-pressure tank 1 or to be invisible from the outside of the high-pressure tank 1.

For example, a portion (regulating element) for setting the pressure regulating characteristic of the pressure regulating valve 12 may be disposed in the second area 16, and the other portion may be disposed in the first area 15. With this construction, an operator or a user can suitably execute the regulation work of the secondary side pressure of the pressure regulating valve 12 from the outside of the tank outer wall surface of the high-pressure tank 1. Further, since a part of the pressure regulating valve 12 is included in the high-pressure tank 1, it is possible to reduce the entire space.

In this case, the regulating element of the pressure regulating valve 12 means a portion capable of setting the urging forces thrust acting on both surfaces of the diaphragm 44, in the example of the diaphragm type pressure regulating valve mentioned above. Specifically, at least one structure of the valve member 42, the valve rod 43, the diaphragm 44, the pressure regulating spring, and the handle (not shown) setting the spring force of the pressure regulating spring and provided for compressing or tensioning the pressure regulating spring corresponds to the regulating element of the pressure regulating valve 12, and is arranged so that it is exposed to the outside of the high-pressure tank 1. In the case that the pressure regulating valve 12 is constituted by the electro-pneumatic regulator, an electric system may be arranged in the second area 16.

As mentioned above, with the valve assembly structure for the high-pressure tank in which the valve assembly 10 is provided in the ferrule portion 3 of the high-pressure tank 1, since the pressure regulating valve 12 is arranged outside of the high-pressure tank 1, it is possible to appropriately enhancing the easiness of handling and the maintenance performance of the pressure regulating valve 12. Further, with this layout structure, since the pressure regulating valve 12 can easily execute the heat exchange with the ambient air, it is possible to reduce the influence of the temperature reduction of the high-pressure tank 1 when discharging the gas. On the other hand, since the cutoff valve 11 is arranged in the high-pressure tank 1, it is possible to reduce the protruding portion to the outside of the high-pressure tank 1. Accordingly, it is possible to improve the mountability of the high-pressure tank 1 with respect to the moving object such as the fuel cell vehicle or the like in which the high-pressure tank 1 and the various valves are mounted.

Particularly, regarding the arrangement of the pressure regulating valve 12, since the axial direction Y-Y of the valve rod 43 is orthogonal to the axial direction X-X of the high-pressure tank 1, it is possible to make the entire length of the high-pressure tank 1 provided with the valve assembly 10 comparatively shorter, in comparison with the case where these directions coincide with each other. Therefore, by just that much, it is possible to make the occupying area of the installation space by the high-pressure tank 1 and the valve assembly 10 smaller. Seeing these effects mentioned above from the different angle, although this is relative, it is possible to increase the capacity of the tank body 2 by extending the tank body 2 of the high-pressure tank 1 in the longitudinal direction. Further, regarding the axial direction X-X of the valve rod 31 of the cutoff valve 11, it is possible to suitably arrange the cutoff valve 11 within the tank body 2, by matching the axial direction X-X of the valve rod 31 of the cutoff valve 11 to the axial direction of the high-pressure tank 1.

Incidentally, even if the axial direction Y-Y of the valve member 43 is not orthogonal to the axial direction X-X of the high-pressure tank 1 or the cutoff valve 11, but if the axial direction Y-Y intersects the axial direction X-X, it is possible to improve the space efficiency and to increase the tank capacity in the same manner as mentioned above.

Here, regarding the case of the structure which is in reverse to the present embodiment (the case of a prior art), that is, in the case where the pressure regulating valve 12 is arranged within the high-pressure tank 1, the relation between the pressure regulating valve 12 and the diameter of the external thread 14 is now considered. In this case, since the frequency of use of the pressure regulating valve 12 is higher than that of the cutoff valve 11, it is necessary to enlarge the size of the pressure regulating valve 12 for securing the compressive strength. So it is necessary to enlarge the diameter of the external thread 14 formed coaxially to the longitudinal direction of the pressure regulating valve 12. However, if the diameter of the thread becomes larger, the strength of the thread portion increases in proportion to the first power of the diameter, however, the pressure receiving area becomes larger in proportion to the second power of the diameter, with the result that the strength of the thread portion is lowered. In other words, in the case that the pressure regulating valve 12 is arranged within the high-pressure tank 1, the diameter of the thread portion becomes larger, and the load applied to the thread portion increases, and accordingly, it is necessary to constitute the thread portion so as to have the higher strength, and the parts cost is increased.

On the contrary, if the cutoff valve 11, the size of which is not required to be enlarged in comparison with the pressure regulating valve 12, is disposed in the high-pressure tank 1, it is not necessary to make the diameter of the thread portion comparatively larger. Accordingly, it is possible to contribute to the cost reduction of the thread portion between the valve assembly 10 and the ferrule portion 3, by employing the valve layout structure as in the present embodiment, even if the size of the pressure regulating valve 12 is larger than the cutoff valve 11. In this case, the sizes of the cutoff valve 11 and the pressure regulating valve 12 can be based, for example, on the entire structures of the respective valves 11 and 12, or can be based on the outer diameters φ (the cutoff valve: d1, the pressure regulating valve: d2) of the respective valves 11 and 12, as seen from the extending directions of the respective valve rods 31 and 43, as shown in the drawing.

## Claims

1. A high-pressure tank comprising a valve assembly integrally having a cutoff valve and a pressure regulating valve, wherein
the valve assembly has a first area inserted within the high-pressure tank, and a second area exposed to the outside of the high-pressure tank;
the cutoff valve is disposed in the first area; and
at least a part of the pressure regulating valve is disposed in the second area.

2. The high-pressure tank according to claim 1, wherein
the high-pressure tank has a mouth portion for inserting the first area into the high-pressure tank, the mouth portion having an internal thread; and
the first area has an external thread engaged with the internal thread.

3. A high-pressure tank comprising a valve assembly integrally having a cutoff valve and a pressure regulating valve, wherein
the valve assembly is provided across the inside and the outside of the high-pressure tank;
the cutoff valve is disposed in the high-pressure tank; and at least a part of the pressure regulating valve is disposed so that it is exposed to the outside of the high-pressure tank.

4. The high-pressure tank according to claim 3, wherein the valve assembly is adapted to be screwed in a ferrule portion of the high-pressure tank.

5. The high-pressure tank according to any one of claims 1 to 4, wherein the at least a part of the pressure regulating valve is constituted by a portion for setting a pressure regulating characteristic of the pressure regulating valve.

6. The high-pressure tank according to any one of claims 1 to 5, wherein a size of the pressure regulating valve is larger than that of the cutoff valve.

7. The high-pressure tank according to any one of claims 1 to 6, wherein an axial direction of a valve rod of the pressure regulating valve intersects an axis of the high-pressure tank.

8. The high-pressure tank according to any one of claims 1 to 6, wherein an axial direction of a valve rod of the pressure regulating valve is orthogonal to an axis line of the high-pressure tank.

9. The high-pressure tank according to any one of claims 1 to 8, wherein an axial direction of a valve rod of the pressure regulating valve intersects an axial direction of a valve rod of the cutoff valve.

10. The high-pressure tank according to any one of claims 1 to 8, wherein an axial direction of a valve rod of the pressure regulating valve is orthogonal to an axial direction of a valve rod of the cutoff valve.

11. A valve assembly provided in a high-pressure tank and integrally having a cutoff valve and a pressure regulating valve, the valve assembly comprising:
a first area inserted within the high-pressure tank; and
a second area exposed to the outside of the high-pressure tank, wherein,
the cutoff valve is disposed in the first area; and
at least a part of the pressure regulating valve is disposed in the second area.

12. A valve assembly provided in a high-pressure tank and integrally having a cutoff valve and a pressure regulating valve, wherein
the cutoff valve is disposed in the high-pressure tank; and
at least a part of the pressure regulating valve is disposed so that it is exposed to the outside of the high-pressure tank.

13. The valve assembly according to claim 11 or 12, wherein the at least a part of the pressure regulating valve is constituted by a portion for setting a pressure regulating characteristic of the pressure regulating valve.

14. The valve assembly according to any one of claims 11 to 13, wherein the valve assembly is adapted to be screwed in a ferrule portion of the high-pressure tank.

15. The valve assembly according to any one of claims 11 to 14, wherein a size of the pressure regulating valve is larger than that of the cutoff valve.

16. The valve assembly according to any one of claims 11 to 15, wherein an axial direction of a valve rod of the pressure regulating valve intersects an axis line of the high-pressure tank.

17. The valve assembly according to any one of claims 11 to 15, wherein an axial direction of a valve rod of the pressure regulating valve is orthogonal to an axis line of the high-pressure tank.

18. The valve assembly according to any one of claims 11 to 17, wherein an axial direction of a valve rod of the pressure regulating valve is orthogonal to an axial direction of a valve rod of the cutoff valve.

19. The valve assembly according to any one of claims 11 to 17, wherein an axial direction of a valve rod of the pressure regulating valve intersects an axial direction of a valve rod of the cutoff valve.
